# EUROPÄISCHE PATENTSCHRIFT

(11) **EP 3 012 153 B1**
(45) Veröffentlichungstag und Bekanntmachung des Hinweises auf die Patenterteilung: **07.06.2023**
(21) Anmeldenummer: 15001865.3
(22) Anmeldetag: 24.06.2015
(51) Int. Cl.: B60Q 1/52, B60Q 5/00, B60Q 1/22

(54) **RÜCKFAHRWARNSYSTEM ZUR ADAPTIVEN STEUERUNG EINER RÜCKFAHRWARNEINRICHTUNG**
REVERSING WARNING SYSTEM FOR ADAPTIVE CONTROL OF REVERSING WARNING ALARM
SYSTÈME AVERTISSEUR DE RECUL DESTINÉ À LA COMMANDE D'UN DISPOSITIF AVERTISSEUR DE RECUL

(30) Priorität: 23.10.2014 DE 102014015754
(43) Veröffentlichungstag der Anmeldung: 27.04.2016
(73) Patentinhaber: MAN Truck & Bus SE, 80995 München (DE)
(72) Erfinder: Brüchner, Nathan, 81673 München (DE); Vidi, Juliano, 82256 Fürstenfeldbruck (DE)
(74) Vertreter: Liebl, Thomas

(56) Entgegenhaltungen:
- EP-A2- 2 679 447
- DE-A1-102006 044 011
- US-A1- 2014 055 260

## Beschreibung

Gegenstand der Erfindung ist ein Rückfahrwarnsystem zur adaptiven Steuerung einer Rückfahrwarneinrichtung eines Fahrzeugs nach Patentanspruch 1, ein Verfahren zum Betreiben eines Rückfahrwarnsystem nach Patentanspruch 12 und ein Fahrzeug, insbesondere ein Nutzfahrzeug, mit dem Rückfahrwarnsystem nach Anspruch 1.

Serienmäßig verfügbar im Nutzfahrzeug sind derzeit Rückfahrwarneinrichtungen, die bei Einlegen des Rückwärtsganges aktiviert werden und eine akustische oder eine optisch-akustische Signaleinrichtung aufweisen, die bei Aktivierung ein akustisches bzw. ein optisches und ein akustisches Signal abgeben. Die Signalgabe erfolgt so, dass Personen, die sich im Umfeld des Fahrzeugs befinden, vor dem zurückstoßenden Fahrzeug gewarnt werden.

Nachteilig bei solchen Rückfahrwarneinrichtungen ist es, dass eine erhebliche Lärmbelästigung von ihnen ausgehen kann. Dies ist insbesondere in den Nachtstunden der Fall, wenn zum Beispiel Verteilerfahrzeuge Supermärkte beliefern oder auch ganztägig in Bereichen mit erhöhtem Ruhebedarf, zum Beispiel in der Umgebung von Krankenhäusern.

Um dem abzuhelfen ist es bekannt, die Rückfahrwarneinrichtung abschaltbar oder in der Lautstärke dimmbar auszuführen. Dies hat jedoch den Nachteil, dass der Fahrer des Fahrzeugs mit einer weiteren Aufgabe belastet wird und darüber hinaus, wenn dieser auch nur kurzzeitig das Abschalten oder Dimmen vergisst, die Ruhestörung bereits stattgefunden hat.

Um den Vorgang des Abschaltens zu automatisieren, wurde in der AT 005 017 U2 bereits vorgeschlagen, dass in einem bestimmten vorprogrammierbaren Zeitraum (also zum Beispiel 22h bis 6h) beim Einlegen des Retourganges die akustische Rückfahrwarneinrichtung (Rückfahrwarner) automatisch zur Gänze ausgeschaltet wird und gleichzeitig heckseitig eine optische Warnblinkanlage in Funktion tritt. Diese Vorgehensweise entlastet den Fahrer zwar von dem Abschaltvorgang, die akustische Rückfahrwarneinrichtung ist aber in dem programmierten Zeitraum immer aus, also auch dann, wenn durch die akustische Warnung niemand gestört würde. Andererseits ist die akustische Rückfahrwarneinrichtung in dem nicht programmierten Zeitraum immer an und wirkt in Bereichen mit erhöhtem Ruhebedarf störend.

Ein Rückfahrwarnsystem ist aus der DE 10 2006 044 011 A1 bekannt.

Ausgehend von diesem Stand der Technik ist es Aufgabe der Erfindung, ein Rückfahrwarnsystem zur adaptiven Steuerung einer Rückfahrwarneinrichtung anzugeben, das ortsbezogen arbeitet, sich als adaptiv an die jeweiligen örtlichen Gegebenheiten anpasst.

Gelöst wird die Aufgabe durch die Merkmale des unabhängigen Anspruchs 1. Bevorzugte Weiterbildungen sind in den Unteransprüchen offenbart.

Zur Lösung der Aufgabe ist vorgesehen, dass das Rückfahrwarnsystem zur adaptiven Steuerung der Rückfahrwarneinrichtung eine Modifikationseinheit enthält, die in Abhängigkeit von der geographischen Position die das Fahrzeug aktuell einnimmt, unter Zuhilfenahme von gespeicherten und/ oder aus der Infrastruktur bezogener Informationen ermittelt, ob eine Modifikation des Lautstärkepegels der Rückfahrwarneinrichtung vorzunehmen ist und die bei einem Erkennen, dass an der aktuellen geographischen Positionen eine Modifikation der Lautstärke vorzunehmen ist, die Steuereinheit so ansteuert, dass bei Rückwärtsfahrt die akustische Signaleinrichtung selbsttätig bzw. automatisch abgeschaltet oder in ihrer Lautstärke reduziert wird.

Die Rückfahrwarneinrichtung ist dabei bevorzugt derart ausgebildet, dass diese auch bei einem an eine Rückwärtsfahrt folgenden Rangieren in Vorwärtsfahrt die optisch-akustische Signaleinrichtung ansteuert. Hierzu kann die Signaleinrichtung beispielsweise nur bei einer langsamen an die Rückwärtsfahrt anschließenden Vorwärtsfahrt, insbesondere bei einer Vorwärtsfahrt in einem Geschwindigkeitsbereich von etwa 1 bis 10 km/h, und/oder nur für ein definiertes Zeitintervall der an die Rückwärtsfahrt anschließenden Vorwärtsfahrt, insbesondere für ein Zeitintervall von in etwa 5 bis 20 Sekunden, angesteuert werden. Sofern eine Modifikation durch die Modifikationseinheit bei einer Rückwärtsfahrt vorgenommen wurde, wird diese Modifikation dann auch bei dem an die Rückwärtsfahrt folgenden Rangieren in Vorwärtsfahrt beibehalten.

Zur Ermittlung des Umstandes, dass an einer geographischen Position die das Fahrzeug aktuell einnimmt, eine Modifikation des Lautstärkepegels der Rückfahrwarneinrichtung vorzunehmen ist, gibt es verschiedene Möglichkeiten. So kann die Modifikationseinheit in einer ersten vorteilhaften Variante eine Infrastruktur-zu-Fahrzeug-Kommunikationseinheit enthalten, die so ausgebildet ist, dass sie von Einrichtungen der Infrastruktur eine Information empfangen kann, die angibt, ob an der aktuell vom Fahrzeug eingenommenen Position eine Modifikation des Lautstärkepegels vorzunehmen ist. Empfängt die Modifikationseinheit eine solche Information, so beaufschlagt diese die Steuereinrichtung in der Weise, dass diese bei Rückwärtsfahrt die akustische Signaleinrichtung abschaltet oder in ihrer Lautstärke reduziert.

Unter dem vorstehend verwendeten Begriff "Infrastruktur-zu-Fahrzeug-Kommunikationseinheit" soll alles verstanden werden, was geeignet ist, eine Information von einer Einrichtung der Infrastruktur an das Fahrzeug zu übermitteln. Im einfachsten Fall kann dies eine optisch abtastbare Marke sein, deren Vorhandensein mit Hilfe von am Fahrzeug angeordneter Sensoren feststellbar ist. Andererseits sind auch beliebig komplexe funktechnische Verbindungen mit entsprechenden Sende- und Empfangseinrichtungen zum Informationsaustausch zwischen Einrichtungen der Infrastruktur und dem Fahrzeug denkbar.

Weitere Beispiele für eine Infrastruktur-zu-Fahrzeug-Kommunikationseinheit sind Kameras mit Bilderkennungseinrichtung, die in der Infrastruktur angeordnete optische Zeichen erkennt und mit gespeicherten Daten vergleichen.

Eine zweite vorteilhafte Variante zur Ermittlung des Umstandes, dass an einer geographischen Position die das Fahrzeug aktuell einnimmt, eine Modifikation des Lautstärkepegels der Rückfahrwarneinrichtung vorzunehmen ist, sieht vor, dass die Modifikationseinheit eine Positionsbestimmungseinrichtung enthält. Diese bestimmt die augenblickliche geographische Position des Fahrzeugs. Die Modifikationseinheit vergleicht die augenblickliche geographische Position mit vorgegebenen oder vorgebbaren gespeicherten geographischen Positionen oder geographischen Bereichen, an denen eine Modifikation des Lautstärkepegels vorzunehmen ist. Im Falle einer ermittelten Übereinstimmung beaufschlagt die Modifikationseinheit die Steuereinrichtung so, dass diese bei Rückwärtsfahrt die akustische Signaleinrichtung abschaltet oder in ihrer Lautstärke reduziert.

Bei der Positionsermittlungseinrichtung handelt es sich heute üblicherweise um ein satellitengestütztes Positionsbestimmungssystem, das die Positionsbestimmung beispielsweise mittels des Global Positioning System (GPS) durchführt, hier sind aber auch andere zukünftige Satellitengestützte oder terrestrische Systeme denkbar.

Von besonderem Vorteil ist es, wenn beide Varianten parallel eingesetzt werden, um zu ermitteln, ob an einer geographischen Position die das Fahrzeug aktuell einnimmt, eine Modifikation des Lautstärkepegels der Rückfahrwarneinrichtung vorzunehmen ist. Die Modifikationseinheit ist dann so ausgebildet, dass sie sowohl eine Infrastruktur-zu-Fahrzeug-Kommunikationseinheit umfasst, mit der sie von Einrichtungen der Infrastruktur eine Information über vor Lärm zu schützende Bereiche empfangen kann, als auch eine Positionsbestimmungseinrichtung, die die augenblickliche geographische Position des Fahrzeugs bestimmt und durch den Vergleich mit gespeicherten Daten vor Lärm zu schützende Bereiche identifiziert. Durch die Kombination beider Vorgehensweisen lassen sich einerseits durch den Vergleich der augenblicklichen geographische Position mit vorgegebenen oder vorgebbaren gespeicherten geographischen Positionen oder geographischen Bereichen, bereits im Speicher vorhandene bekannte vor Lärm zu schützende Bereiche erkennen. Andererseits eröffnet die Infrastruktur-zu-Fahrzeug-Kommunikation die Möglichkeit, nicht im Speicher enthaltene neue oder temporär vor Lärm zu schützende Bereiche als solche zu erkennen, so dass eine Modifikation des Lautstärkepegels in allen denkbaren Fällen vorgenommen werden kann.

In vorteilhafter Weiterbildung des Rückfahrwarnsystems kann vorgesehen sein, dass die Modifikationseinheit zur Positionsbestimmung und zum Vergleich der aktuellen geographischen Position mit gespeicherten vorgegebenen oder vorgebbaren geographischen Positionen oder Bereichen ein Navigationssystem nutzt. In solchen Navigationssystemen sind eine Positionsbestimmungseinheit, zum Beispiel ein GPS-Empfänger, elektronische Landkarten und als sogenannte Points of Interest (POI) gespeicherte geographische Positionen oder Bereiche enthalten. Den Points of Interest können dabei Attribute zugeordnet werden, die den Lautstärkepegel für die akustische Signaleinrichtung oder optisch-akustische Signaleinrichtung festlegen. Bei Übereinstimmung der aktuellen geographischen Position mit einem Point of Interest, werden die diesem Point of Interest zugeordnete Attribute zur Einstellung des Lautstärkepegels für die akustische Signaleinrichtung oder optisch-akustische Signaleinrichtung herangezogen.

Weiter besteht die Möglichkeit das erfindungsgemäße Rückfahrwarnsystem vorteilhaft dahingehend weiterzubilden, dass die Modifikationseinheit eine Entfernungsbestimmungseinheit enthält. Bei Annäherung an eine vorgegebene oder vorgebbare geografische Position oder einen geografischen Bereich (Points of Interest) ermittelt die Modifikationseinheit mit Hilfe der Entfernungsbestimmungseinheit zusätzlich die Entfernung zu diesen und nimmt eine Modifikation des Lautstärkepegels der akustischen Signaleinrichtung oder optischakustischen Signaleinrichtung in Abhängigkeit von der bestimmten Entfernung zu der Position oder dem Bereich vor. Auf diese Weise lässt sich ein guter Kompromiss zwischen Warneffekt und zu vermeidender Lärmbelästigung automatisch realisieren.

Eine den Komfort noch weiter erhöhende vorteilhafte Weiterbildung der Erfindung sieht vor, dass die Modifikationseinheit zusätzlich einen Geber für die aktuelle Tageszeit umfasst. Die Modifikationseinheit fragt bei derartiger Ausbildung, im dem Fall, dass aufgrund der aktuell vom Fahrzeug eingenommenen geographischen Position die Notwendigkeit eine Modifikation des Lautstärkepegels gegeben ist, von dem Geber die aktuelle Tageszeit ab und vergleicht diese mit einem vorgegebenen oder vorgebbaren gespeicherten Zeitraum. Nur dann, wenn die aktuelle Tageszeit innerhalb des vorgegebenen oder vorgebbaren gespeicherten Zeitraumes liegt, beaufschlagt die Modifikationseinheit die Steuereinrichtung so, dass diese bei Rückwärtsfahrt die akustische Signaleinrichtung abschaltet oder in ihrer Lautstärke reduziert. Mit einer solchen Ausbildung des Rückfahrwarnsystems lassen sich alle denkbaren Lärmschutzbedürfnisse abbilden.

Um den Fahrer des Fahrzeugs über den aktuellen Status des Rückfahrwarnsystems informiert zu halten, ist in Weiterbildung der Erfindung vorgesehen, dass der Modifikationseinheit eine Fahrerwarneinrichtung zugeordnet ist. Die Modifikationseinheit kann so immer dann, wenn eine Modifikation der Lautstärke des akustischen Rückfahrsignals vorgenommen wird, eine optische und/ oder akustische Warnung an den Fahrer ausgeben. Besonders vorteilhaft ist es dabei, wenn die Warnung den Fahrer über das Maß der Modifikation informiert. Dies kann optisch, zum Beispiel durch das Darstellen eines die Lautstärke symbolisierenden Balkens oder akustisch zum Beispiel durch Sprachausgabe geschehen.

Es sind trotz der weitgehenden Automatisierung der Lautstärke des akustischen Rückfahrwarnsignals Situationen denkbar, in denen der Fahrer aus Sicherheitsgründen in die Modifikation des akustischen Rückfahrsignals eingreifen muss. Für diesen Fall ist ein vom Fahrer bedienbares Eingabemittel vorgesehen, das auf die Modifikationseinheit wirkt, derart, dass die Modifikation der Lautstärke unterbunden und/ oder der Grad der Modifikation der Lautstärke beeinflusst wird.

Einsetzbar ist das erfindungsgemäße Rückfahrsystem bei Fahrzeugen aller Art insbesondere Nutzfahrzeugen, wie Transportern, Lastkraftwagen, Baustellenfahrzeugen, fahrbaren Baumaschinen und Bussen.

Es ist darauf hinzuweisen, dass die vorstehend und auch nachfolgend beschriebenen Systemkomponenten nicht zwangsläufig als Hardwarekomponenten ausgeführt sein müssen. Es ist vielmehr heute üblich, derartige Komponenten als Softwareroutinen auszubilden, die mittels Recheneinheiten ausgeführt werden und sich vorhandener Hardwarekomponenten wie Sensoren, Aktuatoren, usw. bedienen. Heute in Gebrauch befindliche Fahrzeuge verfügen in der Regel über mehrere solcher Recheneinheiten, die zur Datenübertragung miteinander vernetzt sind und unterschiedlichste Steuer-, Regel-, Analyse-, Überwachungs- und Datenübertragungsroutinen ausführen. Ebenso sind in heute üblichen Fahrzeugen eine Vielzahl von Sensoren und Aktuatoren eingesetzt, die sich zum Teil für unterschiedliche Zwecke nutzen lassen. Die Begriffe Sensoren und Aktuatoren sind dabei in ihrer allgemeinsten Bedeutung zu verstehen.

Zur Lösung der bereits genannten Aufgabe wird ferner ein Verfahren zum Betreiben eines Rückfahrwarnsystems gemäß Anspruch 12 beansprucht.

Die sich aus der erfindungsgemäßen Verfahrensführung ergebenden Vorteile sind identisch mit den bereits gewürdigten Vorteilen des erfindungsgemäßen Rückfahrwarnsystems, so dass diese an dieser Stelle nicht wiederholt werden.

Des Weiteren wird auch ein Fahrzeug, insbesondere ein Nutzfahrzeug, mit dem erfindungsgemäßen Rückfahrwarnsystem beansprucht. Die sich hieraus ergebenden Vorteile sind identisch mit den bereits gewürdigten Vorteilen des erfindungsgemäßen Rückfahrwarnsystems und des erfindungsgemäßen Verfahrens, so dass auch diese hier nicht wiederholt werden.

Weitere Ausgestaltungen und Vorteile der Erfindung werden nachfolgend anhand der Zeichnung näher erläutert, es zeigt:

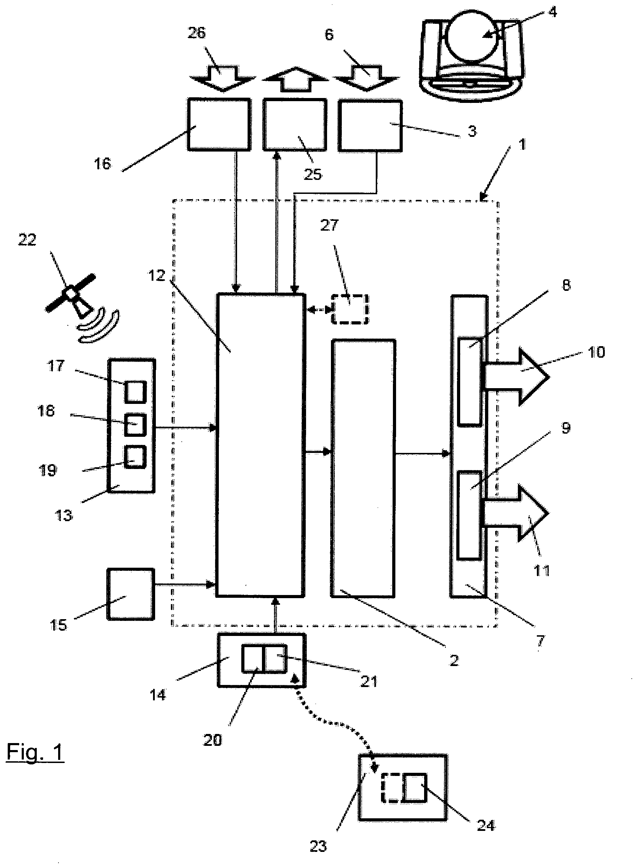

- Fig. 1: eine Rückfahrwarnsystem in Funktionsblockdarstellung

Die Darstellung in Fig. 1 als einziger Figur zeigt ein Rückfahrwarnsystem mit zugeordnetem Navigationssystem und zugeordneter Infrastruktur-zu-Fahrzeug-Kommunikationseinheit in Form von Funktionsblöcken, in einer Prinzipdarstellung. Hier ist zu beachten, dass es sich bei den Funktionsblöcken nicht zwangsläufig um als Hardware vorhandene Einheiten handelt. Wie für die meisten heute in Fahrzeugen zu bewältigenden Steuer- und Regelungsaufgaben werden vielmehr Programme verwendet, die auf einer oder mehreren Recheneinheiten des Fahrzeugs implementiert sind und die in der Abbildung in Form von Funktionsblöcken dargestellten Funktionen temporär ausbilden, wobei sie sich der im Fahrzeug vorhandene Hardwarestruktur wie Sensoren, Aktuatoren, Kommunikationseinheiten usw. bedienen.

Das in der Figur dargestellte Rückfahrwarnsystem 1 ist in einem Fahrzeug angeordnet und umfasst eine Modifikationseinheit 12, die durch eine Fahrstufenwähleinrichtung 3 dann beaufschlagt wird, wenn der Fahrer 4 durch manuelle Betätigung eines Schaltmittels, symbolisiert durch den ersten Betätigungspfeil 6, eine Rückwärts-Fahrstufe angewählt hat. Durch diese Beaufschlagung der Modifikationseinheit 12, üblicherweise handelt es sich dabei um ein elektrisches Signal, steuert die Modifikationseinheit 12 die Steuereinheit 2 an, die ihrerseits eine optisch-akustische Signaleinrichtung 7 ansteuert, welche einen optischen Signalgeber 8 und einen akustischen Signalgeber 9 enthält. So angesteuert aktiviert die optisch-akustische Signaleinrichtung 7 den optischen Signalgeber 8, sodass dieser ein Lichtsignal 10, zum Beispiel in Form eines Blinksignals abgibt und den akustischen Signalgeber 9, sodass dieser ein akustisches Signal 11, zum Beispiel in Form von Pfeiftönen abgibt. Die Lautstärke des akustischen Signals ist dabei in ihrer Grundeinstellung so eingestellt, dass sie der für das akustische Rückfahrsignal maximal zulässigen Lautstärke entspricht.

Zur Modifikation des Lautstärkepegels des akustischen Signalgebers 9 wird die Modifikationseinheit 12 verwendet, die mit einem Navigationssystem 13, einer Infrastruktur-zu-Fahrzeug-Kommunikationseinheit 14, einem Geber 15 für die aktuelle Tageszeit und einem vom Fahrer 4 bedienbaren Eingabemittel 16 wirkverbunden ist. Zur Anzeige des durch die Modifikationseinheit 12 vorgenommenen Grades der Modifikation ist eine Anzeige 25 vorgesehen, die dem Fahrer Aufschluss über den Grad der automatisch eingestellten Modifikation gibt.

Das Navigationssystem 13 enthält, wie bei solchen Systemen üblich, eine Positionsbestimmungseinheit 17, eine in Form von digitalen Daten gespeicherte elektronische Landkarte18 und in einem POl-Speicher 19 abgelegte Information, die Aufschluss darüber geben, an welchen geografischen Orten oder in welchen geografischen Bereichen eine Modifikation des Lautstärkepegels durchzuführen ist. Die Positionsbestimmungseinheit 17 berechnet die geographische Position mit Hilfe mehrerer geostationärer Satelliten 22 in bekannter Weise.

Die Infrastruktur-zu-Fahrzeug-Kommunikationseinheit 14 enthält, wie ebenfalls bei solchen Systemen üblich, eine fahrzeugseitige Sendeeinrichtung 20 und eine fahrzeugseitige Empfangseinrichtung 21 die mit einer Einrichtung 23, die in der Infrastruktur angeordnet ist, zusammenwirken. Diese Einrichtung 23 enthält zumindest eine ortsfeste Sendeeinrichtung 24, die auf funktechnischem Weg eine Information an die fahrzeugseitige Empfangseinrichtung 21 übermittelt. Diese Information beinhaltet, dass eine Modifikation des Lautstärkepegels der Rückfahrwarneinrichtung erforderlich ist und in welchem Umfang.

Der Geber 15 für die aktuelle Tageszeit ist heute, zum Beispiel in Form einer digitalen Uhr, in Fahrzeugen aller Art enthalten und muss lediglich so ausgebildet sein, dass eine Schnittstelle vorhanden ist, an der die aktuelle Tageszeit von der Modifikationseinheit 12 digital abgefragt werden kann.

Bei dem Eingabemittel 16 handelt es sich zum Beispiel um ein Schaltmittel, mit dem, je nach vom Fahrer eingestellter Schaltstellung, der Modifikationseinheit mitgeteilt wird, in welchem Umfang die Modifikation des Lautstärkepegels des akustischen Signals der optisch-akustische Signaleinrichtung 7 verändert werden darf. Bei dem Schalter kann es sich zum Beispiel um einen einfachen Stufenschalter handeln, es sind aber selbstverständlich auch komplexe Eingabemittel wie zum Beispiel menügestützte berührungsempfindliche Bildschirme zur Einstellung einsetzbar.

Im Folgenden soll nun die Funktionsweise des Rückfahrwarnsystems näher erläutert werden. Dazu ist zunächst angenommen, dass das zugehörige Fahrzeug (nicht dargestellt) im Zubringerdienst Ware ausliefert und in einer Stadt unterwegs ist. Wie bei mit Navigationssystemen ausgestatteten Fahrzeugen dieser Art üblich, ist das Navigationssystem 13 eingeschaltet und ermittelt zyklisch die geografische Position an der es sich befindet mittels der Positionsbestimmungseinheit 17. Diese Position ist von der Modifikationseinheit 12 abfragbar, ebenso die in dem POl-Speicher 19 des Navigationssystem 13 gespeicherten Points of Interest, wobei diesen ein Attribut zugeordnet ist, das angibt, ob an diesem Point of Interest eine Reduzierung des Lautstärkepegels des akustischen Warnsignals der optischakustischen Signaleinrichtung 7 erforderlich ist, in welchem Umfang das akustische Warnsignal zu modifizieren ist und zu welchem Tageszeitraum die Modifikation erfolgen soll. Dieses Attribut kann im einfachsten Fall die Art des Point of Interest sein, zum Beispiel Krankenhaus, Supermarkt im Wohngebiet usw.. Beim erstgenannten ist die akustische Rückfahrwarnung ganztägig zu deaktivieren, beim zweiten nur in den Nachtstunden. Es ist aber natürlich auch möglich, den Points of Interest komplexe Informationen zuzuordnen, die explizit beschreiben, zu welcher Zeit und zu welchem Grad die akustische Rückfahrwarnung an diesem Punkt zu modifizieren ist und in welchem Entfernungsbereich zu diesem Point of Interest dies geschehen soll.

Im Weiteren ist angenommen, dass das Fahrzeug angehalten hat und der Fahrer 4 mittels der Fahrstufenwähleinrichtung 3 einen Rückwärtsgang einlegt. Durch das Einlegen des Rückwärtsgangs übermittelt die Fahrstufenwähleinrichtung 3 ein Signal an die Modifikationseinheit 12, wodurch diese veranlasst wird, von dem Navigationssystem 13 die aktuelle geografische Position und den nächstliegenden Point of Interest abzurufen. Stimmen die aktuelle geografische Position und die geografische Position des Point of Interest hinreichend überein, wobei des notwendige Maß der Übereinstimmung in der Modifikationseinheit 12 vorgegeben ist, ermittelt die Modifikationseinheit 12 die Art des Point of Interest. Es sei hier angenommen, dass es sich um einen Supermarkt in einem Wohngebiet handelt. Im nächsten Schritt ermittelt die Modifikationseinheit 12, ob der Art des Point of Interest eine Modifikation des akustischen Rückfahrwarnsignals zugeordnet ist. Dies kann dadurch geschehen, dass in der Modifikationseinheit 12 verschiedene Arten von Points of Interest gespeichert sind und Informationen, die den Grad der Modifikation und den Tageszeitraum in dem zu modifizieren ist für die jeweilige Art von Point of Interest beschreiben. Der Art "Supermarkt in einem Wohngebiet" ist in diesem Beispiel die Information "akustische Rückfahrwarnung aus zwischen 21 Uhr und 8 Uhr" zugeordnet. Nachdem die Modifikationseinheit 12 dies ermittelt hat, fragt sie die aktuelle Tageszeit von dem Geber 15 ab und vergleicht sie mit dem zuvor ermittelten Zeitraum. Liegt die aktuell Tageszeit in diesem Zeitraum, was für das Beispiel angenommen wird, setzt die Modifikationseinheit den Pegel für die akustische Rückfahrwarnung auf "Null" und übermittelt diese Information an die Steuereinheit 2, die daraufhin den akustischen Signalgeber 9 nicht ansteuert sondern nur den optischen Signalgeber 8, so dass die optisch-akustische Signaleinrichtung 7 nur ein Blinksignal abgibt.

Würde es sich bei dem Point of Interest im vorstehenden Beispiel um einen Supermarkt in einem Gewerbegebiet handeln, wäre diese Art Point of Interest in der Liste der in der Modifikationseinheit 12 vorgehaltenen Arten von Points of Interest nicht enthalten, so dass von der Modifikationseinheit 12 an die Steuereinheit 2 eine Information abgegeben wird, dass keine Modifikation des Lautstärkepegels des akustischen Warnsignals vorzunehmen ist. Daraufhin steuert die Steuereinheit 2 den akustischen Signalgeber mit dem Maximalpegel an.

Wenn ein Point of Interest im Navigationssystem nicht enthalten ist, kann natürlich mit der vorstehend beschriebenen Vorgehensweise auch keine Reduzierung des durch die Rückfahrwarneinrichtung verursachten Lärmpegels erreicht werden, obwohl zum Beispiel ein Supermarkt in einem Wohngebiet mit aktiver Rückfahrwarnung angefahren wird. Um hier Abhilfe zu schaffen, ist im Beispiel gemäß Fig. 1 eine Infrastruktur-zu-Fahrzeug-Kommunikationseinrichtung vorgesehen. Derartige Infrastruktur-zu-Fahrzeug-Kommunikationseinrichtungen sind in der einschlägigen Literatur auch unter der Umschreibung Fahrzeug-zu-Infrastruktur-Kommunikation ausführlich beschrieben, so dass sich eine eingehende Darstellung erübrigt. Es soll hier nur auf die für das Beispiel relevanten Aspekte eingegangen werden.

Auch hier wird die oben beschriebene Fahrsituation vorausgesetzt. Weiter wird vorausgesetzt, dass im Bereich des Supermarktes, also in der Infrastruktur, eine Einrichtung 23 vorgesehen ist, die über eine ortsfeste Sendeeinrichtung 24 verfügt. Diese sendet entweder permanent oder dann, wenn sich ein Fahrzeug nähert, ein Signal mit dem Informationsinhalt "Supermarkt im Wohngebiet" aus. Empfängt die fahrzeugseitige Empfangseinrichtung 21 dieses Signal und wird über die Fahrstufenwähleinrichtung 3 ein Rückwärtsgang eingelegt, vergleicht die Modifikationseinheit 12 die Information "Supermarkt im Wohngebiet" mit gespeicherten Informationen, denen eine Information zur Modifikation des akustischen Rückfahrwarnsignals zugeordnet ist. Die gespeicherten Informationen können auch hier den Grad der Modifikation und den Tageszeitraum in dem zu modifizieren ist beinhalten. Der Art "Supermarkt in einem Wohngebiet" ist in diesem Beispiel die Information "akustische Rückfahrwarnung aus zwischen 21 Uhr und 8 Uhr" zugeordnet. Nachdem die Modifikationseinheit 12 dies ermittelt hat, fragt sie die aktuelle Tageszeit von dem Geber 15 ab und vergleicht sie mit dem zuvor ermittelten Zeitraum. Liegt die aktuelle Tageszeit in diesem Zeitraum, was für das Beispiel angenommen wird, setzt die Modifikationseinheit den Pegel für die akustische Rückfahrwarnung auf "Null" und übermittelt diese Information an die Steuereinheit 2, die daraufhin den akustischen Signalgeber 9 nicht ansteuert sondern nur den optischen Signalgeber 8, so dass die optisch-akustische Signaleinrichtung 7 nur ein Blinksignal abgibt.

Um den Fahrer über den Umstand zu informieren, dass eine Modifikation des akustischen Rückfahrwarnsignals stattgefunden hat, ist im vorstehenden Beispiel vorgesehen, dass die Modifikationseinheit 12 parallel zur Beaufschlagung der Steuereinrichtung eine Anzeige 25 beaufschlagt, die dies dem Fahrer 4 signalisiert. Die Darstellung kann in Form eines einfachen Blinksignals erfolgen oder in der Weise, dass der Grad der Modifikation zum Beispiel durch das Darstellen eines Balkens auf einer Anzeige erfolgt, wobei die Länge des Balkens die aktuelle Lautstärke des Rückfahrsignals symbolisiert.

Um dem Fahrer eine Eingriffsmöglichkeit zu geben, ist im vorstehenden Beispiel vorgesehen, dass dieser, zum Beispiel in Gefahrensituationen, wie durch den zweiten Betätigungspfeil 26 symbolisiert, ein Eingabemittel 16 betätigt, das auf die Modifikationseinheit 12 wirkt, die daraufhin ein Ansteuersignal an die Steuereinheit 2 abgibt, das den Maximallautstärkepegel des akustischen Rückfahrsignals einstellt.

Abweichend vom vorstehenden Beispiel kann vorgesehen sein, dass das Navigationssystem 13 nur die aktuelle geografische Position zur Verfügung stellt. In diesem Fall ist ein externer POl-Speicher 27 vorgesehen, der die Art und geographische Lage von Points of Interest enthält. Die Ermittlung ob eine Modifikation des akustischen Rückfahrsignals stattfinden soll, entspricht der vorstehend beschriebenen, nur mit dem Unterschied, dass auf den externen POI-Speicher 27 zugegriffen wird.

Im vorstehenden Beispiel wurde die durchzuführende Modifikation des akustischen Rückfahrsignals aus der Art des Point of Interest dekodiert, diese Vorgehensweise ist natürlich nicht zwingend, es kann vielmehr zu jedem Point of Interest die Art der durchzuführenden Modifikation explizit gespeichert sein.

Um einen Point of Interest in einer vorgegebenen Entfernung von dessen geographischer Position vor Lärm zu schützen, kann vorgesehen sein, dass eine Entfernungsermittlung zwischen der augenblicklichen geographischen Position des Fahrzeugs und der geographischen Position des Point of Interest durchgeführt wird. Vorgegebenen, in der Modifikationseinheit 12 gespeicherten Entfernungen zu einem Point of Interest können dabei unterschiedliche Modifikationsgrade zugeordnet sein. Alternativ besteht natürlich auch die Möglichkeit, zu jedem beliebigen Point of Interest eine Information abzuspeichern, in welcher Entfernung welche Modifikation durchzuführen ist.

### Bezugszeichenliste

- 1: Rückfahrwarnsystem
- 2: Steuereinheit
- 3: Fahrstufenwähleinrichtung
- 4: Fahrer
- 5: Schaltmittel
- 6: erster Betätigungspfeil
- 7: optisch-akustische Signaleinrichtung
- 8: optischer Signalgeber
- 9: akustischer Signalgeber
- 10: Lichtsignal
- 11: akustisches Signal
- 12: Modifikationseinheit
- 13: Navigationssystem
- 14: fahrzeugseitige Infrastruktur-zu-Fahrzeug-Kommunikationseinheit
- 15: Geber (für die aktuelle Tageszeit)
- 16: Eingabemittel
- 17: Positionsbestimmungseinheit
- 18: elektronische Landkarte
- 19: POI-Speicher
- 20: fahrzeugseitige Sendeeinrichtung
- 21: fahrzeugseitige Empfangseinrichtung
- 22: Satelliten
- 23: Einrichtung in der Infrastruktur
- 24: ortsfeste Sendeeinrichtung
- 25: Anzeige
- 26: zweiter Betätigungspfeil
- 27: externer POI-Speicher

## Patentansprüche

1. Rückfahrwarnsystem zur adaptiven Steuerung einer Rückfahrwarneinrichtung eines Fahrzeugs, umfassend eine Steuereinheit (2), eine Modifikationseinheit (12) und eine Rückfahrwarneinrichtung, welche eine akustische Signaleinrichtung oder eine optisch-akustische Signaleinrichtung (7) aufweist, wobei die Rückfahrwarneinrichtung beim Zurücksetzen des Fahrzeugs die akustische Signaleinrichtung oder die optisch-akustische Signaleinrichtung (7) ansteuert und wobei mit der Steuereinheit (2) die akustische Signaleinrichtung oder die optisch-akustische Signaleinrichtung (7) in ihrer Lautstärke beinflussbar und/oder abschaltbar ist, wobei die Modifikationseinheit (12) vorgesehen ist, die in Abhängigkeit von der geographischen Position, die das Fahrzeugs aktuell einnimmt, unter Zuhilfenahme von gespeicherten und/oder aus der Infrastruktur bezogener Informationen ermittelt, ob eine Modifikation des Lautstärkepegels der Rückfahrwarneinrichtung vorzunehmen ist und die, in dem Fall, dass eine Modifikation vorzunehmen ist, die Steuereinheit (2) so beaufschlagt, dass diese bei Rückwärtsfahrt die akustische Signaleinrichtung oder die optisch-akustische Signaleinrichtung (7) in ihrer Lautstärke abschaltet oder reduziert.

2. Rückfahrwarnsystem nach Anspruch 1, **dadurch gekennzeichnet, dass** die Modifikationseinheit (12) mit einer fahrzeugseitigen Infrastruktur-zu-Fahrzeug-Kommunikationseinheit (14) wirkverbunden ist, die so ausgebildet ist, dass sie von Einrichtungen (23) der Infrastruktur eine Information empfangen kann, die angibt, ob an der aktuell vom Fahrzeug eingenommenen Position eine Modifikation des Lautstärkepegels vorzunehmen ist und dass, bei Empfangen einer solchen Information, die Modifikationseinheit (12) die Steuereinheit (2) so beaufschlagt, dass diese bei Rückwärtsfahrt die akustische Signaleinrichtung oder die optisch-akustische Signaleinrichtung (7) in ihrer Lautstärke abschaltet oder reduziert.

3. Rückfahrwarnsystem nach Anspruch 1, **dadurch gekennzeichnet, dass** die Modifikationseinheit (12) eine Positionsbestimmungseinrichtung enthält, die die augenblickliche geographische Position des Fahrzeugs bestimmt und dass die Modifikationseinheit (12) die augenblickliche geographische Position mit vorgegebenen oder vorgebbaren gespeicherten geographischen Positionen oder geographischen Bereichen vergleicht, an denen eine Modifikation des Lautstärkepegels vorzunehmen ist und im Falle einer ermittelten Übereinstimmung, die Modifikationseinheit (12) die Steuereinheit (2) so beaufschlagt, dass diese bei Rückwärtsfahrt die akustische Signaleinrichtung oder die optisch-akustische Signaleinrichtung (7) in ihrer Lautstärke abschaltet oder reduziert.

4. Rückfahrwarnsystem nach Anspruch 1, **dadurch gekennzeichnet, dass** die Modifikationseinheit (12) sowohl eine fahrzeugseitige Infrastruktur-zu-Fahrzeug-Kommunikationseinheit (14) enthält, die so ausgebildet ist, dass sie von Einrichtungen (23) der Infrastruktur eine Information empfangen kann, als auch eine Positionsbestimmungseinrichtung, die die augenblickliche geographische Position des Fahrzeugs bestimmt.

5. Rückfahrwarnsystem nach Anspruch 2, **dadurch gekennzeichnet, dass** die fahrzeugseitige Infrastruktur-zu-Fahrzeug-Kommunikationseinheit (14) eine Funkempfangseinrichtung (21) ist, die von einer in der Infrastruktur angeordneten Sendeeinrichtung (24) emittierte Funksignale empfängt.

6. Rückfahrwarnsystem nach Anspruch 3, **dadurch gekennzeichnet, dass** die Modifikationseinheit (12) zur Positionsbestimmung und zum Vergleich der aktuellen geographischen Position mit gespeicherten vorgegebenen oder vorgebbaren geographischen Positionen oder Bereichen ein Navigationssystem(13) nutzt, in dem eine Positionsbestimmungseinheit (17), elektronische Landkarten (18) und als sogenannte Points of Interest (POI) in einem POl-Speicher (19) gespeicherte geographische Positionen oder Bereiche enthalten sind, wobei den Point of Interest jeweils Attribute zugeordnet sind, die den Lautstärkepegel für die akustische Signaleinrichtung oder die optisch-akustische Signaleinrichtung (7) festlegen und dass, bei Übereinstimmung der aktuellen geographischen Position mit einem Point of Interest, das diesem Point of Interest zugeordnete Attribut zur Einstellung des Lautstärkepegels für die akustische Signaleinrichtung oder die optisch-akustische Signaleinrichtung (7) herangezogen wird.

7. Rückfahrwarnsystem nach Ansprüchen 3 oder 6, **dadurch gekennzeichnet, dass** die Modifikationseinheit (12) eine Entfernungsbestimmungseinheit enthält und die Modifikationseinheit (12), bei Annäherung an eine vorgegebene oder vorgebbare geografische Position oder einen geografischen Bereich, zusätzlich die Entfernung zu diesen bestimmt und eine Modifikation des Lautstärkepegels der akustischen Signaleinrichtung oder der optisch-akustischen Signaleinrichtung (7) in Abhängigkeit von der bestimmten Entfernung zu der Position oder dem Bereich vornimmt.

8. Rückfahrwarnsystem nach einem der vorhergehenden Ansprüche, **dadurch gekennzeichnet, dass** die Modifikationseinheit (12) zusätzlich einen Geber (15) für die aktuelle Tageszeit umfasst und dass die Modifikationseinheit (12) im dem Fall, dass aufgrund der aktuell vom Fahrzeug eingenommenen geographischen Position eine Modifikation des Lautstärkepegels vorzunehmen ist, von dem Geber (15) die aktuelle Tageszeit abfragt und mit einem vorgegebenen oder vorgebbaren gespeicherten Zeitraum vergleicht und dass nur dann, wenn die aktuelle Tageszeit innerhalb des vorgegebenen oder vorgebbaren gespeicherten Zeitraumes liegt, die Modifikationseinheit (12) die Steuereinheit (2) so beaufschlagt, dass diese bei Rückwärtsfahrt die akustische Signaleinrichtung (9) abschaltet oder in ihrer Lautstärke reduziert.

9. Rückfahrwarnsystem nach einem der vorhergehenden Ansprüche, **dadurch gekennzeichnet, dass** der Modifikationseinheit (12) eine Fahrerwarneinrichtung zugeordnet ist, und dass die Modifikationseinheit immer dann, wenn eine Modifikation der Lautstärke des akustischen Rückfahrsignals vorgenommen wird, eine optische und/oder akustische Warnung an den Fahrer (4) ausgibt.

10. Rückfahrwarnsystem nach Anspruch 9, **dadurch gekennzeichnet, dass** die Warnung den Fahrer (4) über das Maß der Modifikation informiert.

11. Rückfahrwarnsystem nach einem der vorhergehenden Ansprüche, **dadurch gekennzeichnet, dass**, ein vom Fahrer (4) bedienbares Eingabemittel (16) vorgesehen ist, das auf die Modifikationseinheit (12) wirkt, derart, dass die Modifikation der Lautstärke unterbindbar und/ oder der Grad der Modifikation der Lautstärke beeinflussbar ist.

12. Verfahren zum Betreiben eines Rückfahrwarnsystems nach einem der vorhergehenden Ansprüche, mit folgenden Schritten:
- Ermitteln des Zurücksetzens des Fahrzeugs,
- Ermitteln der geographischen Position, die das Fahrzeugs aktuell einnimmt,
- Ermitteln in Abhängigkeit der geographischen Position, die das Fahrzeugs aktuell einnimmt, unter Zuhilfenahme von gespeicherten und/ oder aus der Infrastruktur bezogener Informationen, ob eine Modifikation des Lautstärkepegels der Rückfahrwarneinrichtung vorzunehmen ist,
- in dem Fall, dass eine Modifikation vorzunehmen ist, die Steuereinheit (2) so beaufschlagen, dass bei Rückwärtsfahrt die akustische Signaleinrichtung oder die optisch-akustische Signaleinrichtung (7) in ihrer Lautstärke abgeschaltet oder reduziert wird.

13. Fahrzeug, insbesondere Nutzfahrzeug, mit einem Rückfahrwarnsystem nach einem der Ansprüche 1 bis 11.

## Claims

1. Reversing warning system for adaptively controlling a reversing warning device of a vehicle, comprising a control unit (2), a modification unit (12) and a reversing warning device, which has an audible signalling device or a visual-audible signalling device (7), wherein the reversing warning device actuates the audible signalling device or the visual-audible signalling device (7) when the vehicle is reversing and wherein the control unit (2) can be used to influence and/or switch off the volume of the audible signalling device or the visual-audible signalling device (7), wherein there is provision for the modification unit (12), which determines, on the basis of the geographical position currently occupied by the vehicle, using stored information and/or information obtained from the infrastructure, whether a modification to the volume level of the reversing warning device needs to be made and which, if a modification does need to be made, controls the control unit (2) such that it switches off or reduces the volume of the audible signalling device or the visual-audible signalling device (7) during reversing.

2. Reversing warning system according to Claim 1, **characterized in that** the modification unit (12) is operatively connected to an on-vehicle infrastructure-to-vehicle communication unit (14) designed such that it is able to receive information from devices (23) of the infrastructure indicating whether a modification to the volume level needs to be made at the position currently occupied by the vehicle, and **in that**, when such information is received, the modification unit (12) controls the control unit (2) such that it switches off or reduces the volume of the audible signalling device or the visual-audible signalling device (7) during reversing.

3. Reversing warning system according to Claim 1, **characterized in that** the modification unit (12) contains a position determination device that determines the present geographical position of the vehicle, and **in that** the modification unit (12) compares the present geographical position with predefined or predefinable stored geographical positions or geographical areas at which a modification to the volume level needs to be made and, if a match is identified, the modification unit (12) controls the control unit (2) such that it switches off or reduces the volume of the audible signalling device or the visual-audible signalling device (7) during reversing.

4. Reversing warning system according to Claim 1, **characterized in that** the modification unit (12) contains both an on-vehicle infrastructure-to-vehicle communication unit (14), designed such that it is able to receive information from devices (23) of the infrastructure, and a position determination device that determines the present geographical position of the vehicle.

5. Reversing warning system according to Claim 2, **characterized in that** the on-vehicle infrastructure-to-vehicle communication unit (14) is a radio receiving device (21) that receives radio signals emitted by a transmitting device (24) arranged in the infrastructure.

6. Reversing warning system according to Claim 3, **characterized in that** the modification unit (12) uses a navigation system (13) for position determination and for comparing the current geographical position with stored predefined or predefinable geographical positions or areas, which navigation system contains a position determination unit (17), electronic maps (18) and geographical positions or areas stored as so-called points of interest (POI) in a POI memory (19), the points of interest each having associated attributes that define the volume level for the audible signalling device or the visual-audible signalling device (7), and **in that**, if the current geographical position matches a point of interest, the attribute associated with this point of interest is used to set the volume level for the audible signalling device or the visual-audible signalling device (7).

7. Reversing warning system according to Claim 3 or 6, **characterized in that** the modification unit (12) contains a distance determination unit and the modification unit (12), on approaching a predefined or predefinable geographical position or a geographical area, additionally determines the distance therefrom and makes a modification to the volume level of the audible signalling device or the visual-audible signalling device (7) on the basis of the determined distance from the position or the area.

8. Reversing warning system according to one of the preceding claims, **characterized in that** the modification unit (12) additionally comprises a sensor (15) for the current time of day, and **in that**, if a modification to the volume level needs to be made on the basis of the geographical position currently occupied by the vehicle, the modification unit (12) requests the current time of day from the sensor (15) and compares said time of day with a predefined or predefinable stored period, and **in that** only if the current time of day is within the predefined or predefinable stored period does the modification unit (12) control the control unit (2) such that it switches off or reduces the volume of the audible signalling device (9) during reversing.

9. Reversing warning system according to one of the preceding claims, **characterized in that** the modification unit (12) has an associated driver warning device, and **in that** the modification unit outputs a visual and/or audible warning to the driver (4) whenever a modification to the volume of the audible reversing signal is made.

10. Reversing warning system according to Claim 9, **characterized in that** the warning informs the driver (4) about the extent of the modification.

11. Reversing warning system according to one of the preceding claims, **characterized in that** there is provision for an input means (16) that can be operated by the driver (4) and that affects the modification unit (12) in such a way that the modification to the volume can be prevented and/or the degree of the modification to the volume can be influenced.

12. Method for operating a reversing warning system according to one of the preceding claims, having the following steps:
- determining that the vehicle is reversing,
- determining the geographical position currently occupied by the vehicle,
- determining, on the basis of the geographical position currently occupied by the vehicle, using stored information and/or information obtained from the infrastructure, whether a modification to the volume level of the reversing warning device needs to be made,
- if a modification does need to be made, controlling the control unit (2) such that the volume of the audible signalling device or the visual-audible signalling device (7) is switched off or reduced during reversing.

13. Vehicle, in particular utility vehicle, having a reversing warning system according to one of Claims 1 to 11.

## Revendications

1. Système avertisseur de recul destiné à la commande adaptative d'un dispositif avertisseur de recul d'un véhicule, comprenant une unité de commande (2), une unité de modification (12) et un dispositif avertisseur de recul, lequel possède un dispositif de signalisation acoustique ou un dispositif de signalisation optoacoustique (7),
le dispositif avertisseur de recul commandant le dispositif de signalisation acoustique ou le dispositif de signalisation optoacoustique (7) lors du recul du véhicule et
le dispositif de signalisation acoustique ou le dispositif de signalisation optoacoustique (7) pouvant être influencés dans leur niveau sonore et/ou mis hors circuit avec l'unité de commande (2), l'unité de modification (12) étant prévue, laquelle détermine en fonction de la position géographique qu'adopte actuellement le véhicule, à l'aide d'informations mémorisées et/ou tirées de l'infrastructure, si une modification du niveau du volume sonore du dispositif avertisseur de recul doit être effectuée et laquelle, dans le cas où une modification doit être effectuée, sollicite l'unité de commande (2) de telle sorte que celle-ci, lors d'une marche arrière, met hors circuit ou réduit le volume sonore du dispositif de signalisation acoustique ou du dispositif de signalisation optoacoustique (7).

2. Système avertisseur de recul selon la revendication 1, **caractérisé en ce que** l'unité de modification (12) est en liaison fonctionnelle avec une unité de communication d'infrastructure à véhicule (14) côté véhicule, laquelle est configurée de telle sorte qu'elle peut recevoir de la part de dispositifs (23) de l'infrastructure une information qui indique si une modification du niveau du volume sonore doit être effectuée à la position actuellement adoptée par le véhicule, et qu'en cas de réception d'une telle information, elle sollicite l'unité de commande (2) de telle sorte que celle-ci, lors d'une marche arrière, met hors circuit ou réduit le volume sonore du dispositif de signalisation acoustique ou du dispositif de signalisation optoacoustique (7).

3. Système avertisseur de recul selon la revendication 1, **caractérisé en ce que** l'unité de modification (12) contient un dispositif de détermination de position qui détermine la position géographique instantanée du véhicule et **en ce que** l'unité de modification (12) compare la position géographique instantanée avec des positions géographiques enregistrées prédéfinies ou pouvant être prédéfinies, auxquelles une modification du niveau du volume sonore doit être effectuée et, dans le cas d'une concordance identifiée, l'unité de modification (12) sollicite l'unité de commande (2) de telle sorte que celle-ci, lors d'une marche arrière, met hors circuit ou réduit le volume sonore du dispositif de signalisation acoustique ou du dispositif de signalisation optoacoustique (7).

4. Système avertisseur de recul selon la revendication 1, **caractérisé en ce que** l'unité de modification (12) contient à la fois une unité de communication d'infrastructure à véhicule (14) côté véhicule, laquelle est configurée de telle sorte qu'elle peut recevoir une information en provenance de dispositifs (23) de l'infrastructure, et aussi un dispositif de détermination de position, qui détermine la position géographique instantanée du véhicule.

5. Système avertisseur de recul selon la revendication 2, **caractérisé en ce que** l'unité de communication d'infrastructure à véhicule (14) côté véhicule est un dispositif de réception radioélectrique (21) qui reçoit des signaux radioélectriques émis depuis un dispositif d'émission (24) disposé dans l'infrastructure.

6. Système avertisseur de recul selon la revendication 3, **caractérisé en ce que** l'unité de modification (12) utilise, pour la détermination de position et pour la comparaison de la position géographique actuelle avec des positions géographiques enregistrées prédéfinies ou pouvant être prédéfinies, un système de navigation (13) dans lequel sont contenues une unité de détermination de position (17), des cartes géographiques électroniques (18) et, en tant que points dits d'intérêt (POI), des positions ou des zones géographiques enregistrées dans une mémoire de POI (19), des attributs étant respectivement associés au point d'intérêt, lesquels spécifient le niveau de volume sonore pour le dispositif de signalisation acoustique ou le dispositif de signalisation optoacoustique (7), et **en ce qu'**en cas de concordance de la position géographique actuelle avec un point d'intérêt, l'attribut associé à ce point d'intérêt est utilisé pour le réglage du niveau de volume sonore pour le dispositif de signalisation acoustique ou le dispositif de signalisation optoacoustique (7).

7. Système avertisseur de recul selon les revendications 3 ou 6, **caractérisé en ce que** l'unité de modification (12) contient une unité de détermination de distance et l'unité de modification (12), dans le cas de l'approche d'une position géographique ou d'une zone géographique prédéfinie ou pouvant être prédéfinie, détermine en plus la distance par rapport à celle-ci et effectue une modification du niveau de volume sonore du dispositif de signalisation acoustique ou du dispositif de signalisation optoacoustique (7) en fonction de la distance déterminée par rapport à la position ou la zone.

8. Système avertisseur de recul selon l'une des revendications précédentes, **caractérisé en ce que** l'unité de modification (12) comporte en plus un transmetteur (15) pour l'heure du jour actuelle et **en ce que** l'unité de modification (12), dans le cas où une modification du niveau de volume sonore doit être effectuée sur la base de la position géographique actuellement adoptée par le véhicule, interroge l'heure du jour actuelle auprès du transmetteur (15) et la compare avec une période prédéfinie ou pouvant être prédéfinie enregistrée et **en ce que** l'unité de modification (12), seulement si l'heure du jour actuelle se trouve à l'intérieur de la période prédéfinie ou pouvant être prédéfinie enregistrée, sollicite l'unité de commande (2) de telle sorte que celle-ci, lors d'une marche arrière, met hors circuit ou réduit le volume sonore du dispositif de signalisation acoustique (9).

9. Système avertisseur de recul selon l'une des revendications précédentes, **caractérisé en ce qu'**un dispositif d'avertissement du conducteur est associé à l'unité de modification (12), et **en ce que** l'unité de modification, à chaque fois qu'une modification du volume sonore du signal de recul acoustique est effectuée, délivre au conducteur (4) un avertisseur visuel et/ou sonore.

10. Système avertisseur de recul selon la revendication 9, **caractérisé en ce que** l'avertissement du conducteur (4) l'informe à propos de l'amplitude de la modification.

11. Système avertisseur de recul selon l'une des revendications précédentes, **caractérisé en ce qu'**un moyen de saisie (16) commandable par le conducteur (4) est présent, lequel agit sur l'unité de modification (12) de telle sorte que la modification du volume sonore peut être inhibée et/ou le degré de la modification du volume sonore peut être influencé.

12. Procédé pour faire fonctionner un système avertisseur de recul selon l'une des revendications précédentes, comprenant les étapes suivantes :
- identification du recul du véhicule,
- identification de la position géographique que le véhicule adopte actuellement,
- identification, en fonction de la position géographique, que le véhicule adopte actuellement, à l'aide d'informations mémorisées et/ou tirées de l'infrastructure, si une modification du niveau du volume sonore du dispositif avertisseur de recul doit être effectuée
- dans le cas où une modification doit être effectuée, sollicitation de l'unité de commande (2) de telle sorte que, lors d'une marche arrière, le volume sonore du dispositif de signalisation acoustique ou du dispositif de signalisation optoacoustique (7) est mis hors circuit ou réduit.

13. Véhicule, notamment véhicule utilitaire , comprenant un système avertisseur de recul selon l'une des revendications 1 à 11.
